# EUROPÄISCHE PATENTSCHRIFT

(11) **EP 2 701 253 B1**
(45) Veröffentlichungstag und Bekanntmachung des Hinweises auf die Patenterteilung: **04.03.2015**
(21) Anmeldenummer: 13003795.5
(22) Anmeldetag: 30.07.2013
(51) Int. Cl.: H02G 3/32

(54) **Kabelhalter-Anordnung**
Cable holder assembly
Agencement de porte-câble

(30) Priorität: 20.08.2012 DE 202012007989 U
(43) Veröffentlichungstag der Anmeldung: 26.02.2014
(73) Patentinhaber: S-Fasteners GmbH, 75382 Althengstett (DE)
(72) Erfinder: Homner, Bernhard, 75365 Calw-Stammheim (DE); Svyrsky, Dimitri, 75177 Pforzheim (DE)
(74) Vertreter: Blutke, Klaus Wilhelm

(56) Entgegenhaltungen:
- EP-A2- 2 045 475
- GB-A- 2 367 695
- US-B1- 6 732 982

## Beschreibung

Die Erfindung betrifft eine Kabelhalter-Anordnung mit übereinander anordnungsbaren Kabelhalter-Einheiten.

In der UK Patentanmeldung GB 2 367 695 A ist eine Kabelhalter-Anordnung mit übereinander angeordneten Kabelhaltern beschrieben. Alle Kabelhalter sind auf einem gemeinsamen Bolzen angeordnet und werden durch Schraubmuttern an beiden Bolzenenden zusammengehalten. Ein Kabelhalter besteht aus zwei übereinander angeordneten Hälften, zwischen denen die Kabel angeordnet werden. Eine Rast-Dreh-Anordnung gestattet eine Verdrehung dieser Hälften um die Bolzen-Achse, um einen Zugriff auf die Kabel zu gewähren.

In der US Patentanmeldung US 2004/0150978 A1 ist eine Kabelhalter-Anordnung beschrieben, bei der die Kabel hauptsächlich übereinander zwischen zwei benachbarten gabelzinkenähnlichen Elementen eine Kabelhalters angeordnet sind. Jeder Kabelhalter ist mit dergleichen Grundplatte verbunden und kann mittels einer Dreh-Rast-Anordnung verdreht werden.

In der Europäischen Patentschrift EP 1 772 935 B1 ist eine Kabelhalter-Anordnung beschrieben, welche ein Basisteil und eine Steckverbinder-Anordnung mit Federarmen umfaßt. Der Kabelhalter sitzt auf dem Steckverbinder, welcher mit seinen Federarmen in eine Aussparung des Basisteils einführbar ist. Er kann verdreht und in einer Dreh/Rast-Position fixiert werden. Die Rastverbindung erfolgt zwischen Rast-Elementen am Federarm und Rastpositionen an der Innenwandung der Aussparung; hierfür sind ineinandergreifende Rastrillen vorgesehen, welche parallel zur Drehachse des Steckverbinders verlaufen.

Es ist Aufgabe der Erfindung, eine turmähnliche Kabelhalter-Anordnung vorzusehen, bei der die Kabelhalter in unterschiedlichen Höhen über einer Bodenplatte o.ä. anordnungsbar sind und je nach Anforderung des Kabelverlaufs in unterschiedliche Richtungen ausgerichtet werden können.

Diese Aufgabe der Erfindung wird durch die im kennzeichnenden Teil des Anspruch 1 angegebenen Merkmale gelöst. Vorteilhafte Weiterbildungen der Erfindung sind in den Unteransprüchen gekennzeichnet.

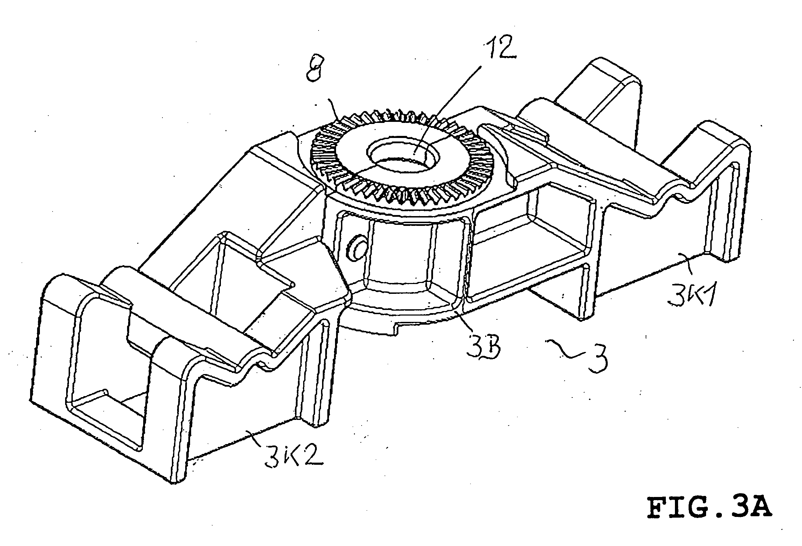

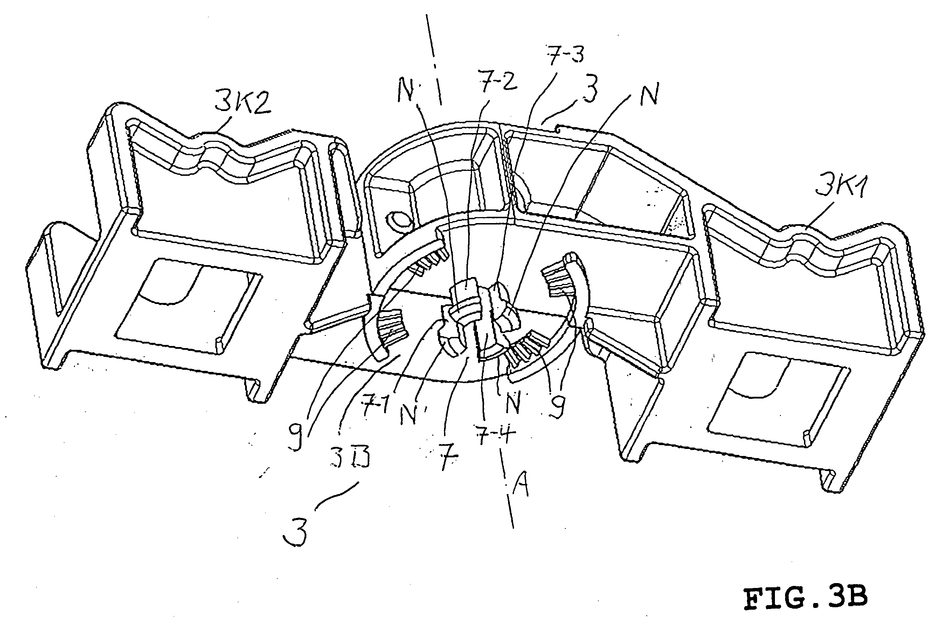

Ausführungsbeispiele der Erfindung sind in den Zeichnungen dargestellt und werden im folgenden näher beschrieben. Es zeigen:

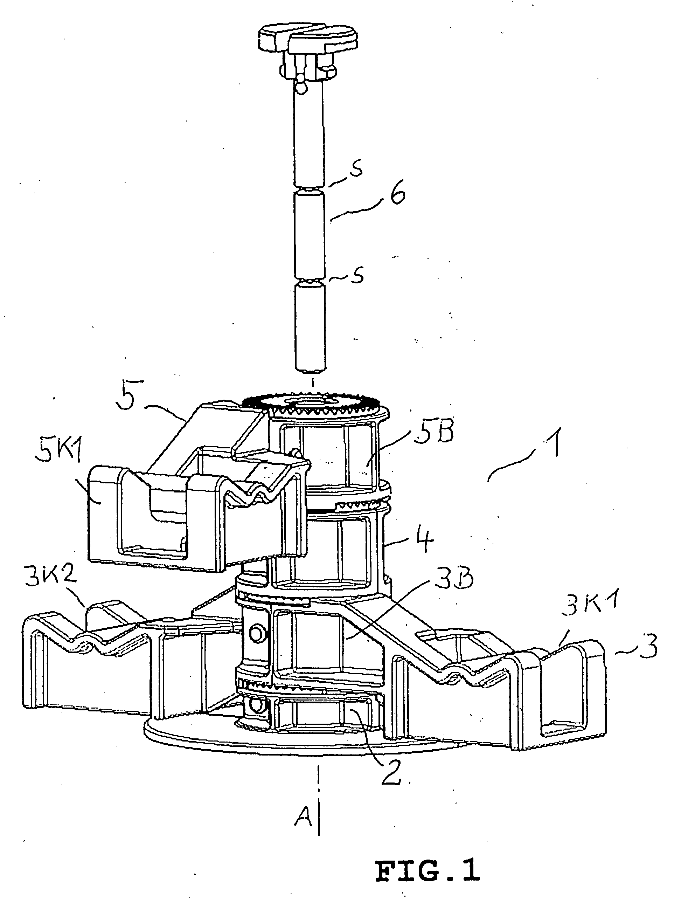

FIG.1 eine isometrische Darstellung der erfindungsgemäßen KabelHalter-Anordnung mit einem Fußteil, mit Kabelhalter-Einheiten, mit einem Abstandshalter und mit einen von der obersten Kabelhalter-Einheit her einzuführenden Sicherungsbolzen;
FIG.2A
   eine isometrische Darstellung des Fußteils mit Blick auf dessen Oberseite;
FIG. 2B
   eine isometrische Darstellung des aus zwei identischen Hälften bestehenden Fußteils;
FIG. 3 A
   eine isometrische Darstellung einer Kabelhalter-Einheit, hier mit zwei Kabelhaltern, mit Blick auf deren Oberseite;
FIG. 3B
   eine isometrische Darstellung der Kabelhalter-Einheit gemäß FIG. 3A mit Blick auf deren Unterseite;
FIG.3C
   eine isometrische Darstellung der aus zwei identischen Hälften bestehenden Kabelhalter-Einheit gemäß FIG. 3B;
FIG. 4
   eine isometrische Darstellung einer aus zwei ungleichen Teilen zusammengesetzten Kabelhalter-Einheit mit einem Kabelhalter, mit Blick auf deren Oberseite;
FIG. 5
   eine isometrische Darstellung des Sicherungsbolzens;
FIG.6
   eine isometrische Teil-Schnittdarstellung einer erfindungsgemäßen Kabelhalter-Anordnung, bestehend aus einem Fußteil, einer Kabelhalter-Einheit mit einem Kabelhalter und einem Sicherungs-Bolzen
FIG.7
   eine isometrische Darstellung eines mit einem Kabelbinder auf einem Kabelhalter befestigten Kabelbündels.

FIG.1 zeigt
eine isometrische Darstellung der erfindungsgemäßen KabelHalter-Anordnung 1 mit einem Fußteil 2, mit den Kabelhalter-Einheiten 3 und 5, mit einem Abstandshalter 4 und mit einen von der obersten Kabelhalter-Einheit 5 her in die Kabelhalter-Anordnung 1 her einzuführenden Sicherungsbolzen 6.

Das Fußteil 2 ist auf einer Boden-, Wand-, Deckenplatte o.ä. befestigbar, z.B. durch eine Klebverbindung.

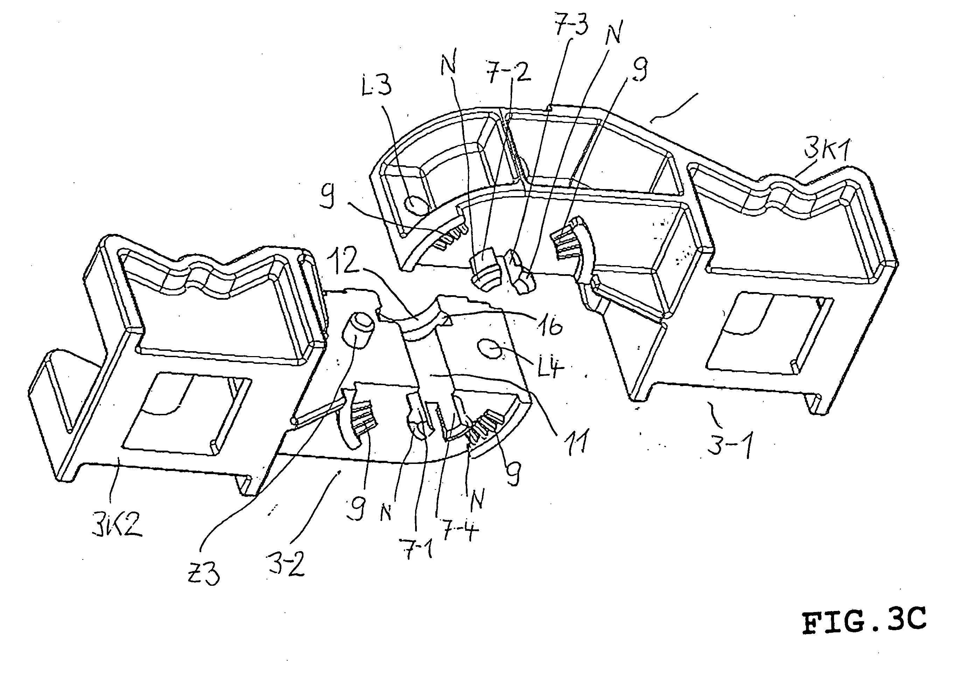

Die Kabelhalter-Anordnung zeigt einen turmähnlichen Aufbau, bei dem die einzelnen Elemente wahlweise übereinander angeordnet werden können. In der Darstellung FIG. 1 folgt auf das Fußteil 2 die Kabelhalter-Einheit 3, über der der Abstandshalter 4 mit der nachfolgenden Kabelhalter-Einheit 5 angeordnet ist. Der Zusammenbau der Kabelhalter-Anordnung 1 erfolgt in folgender Reihenfolge:
Die Kabelhalter-Einheit 3 wird auf das Fußteil 2 gesetzt; dabei werden beide Teile 3 und 2 durch eine lösbare Steckverbindung verbunden (Einzelheiten hierzu werden später erläutert). Dann wird auf die Kabelhalter-Einheit 3 der Abstandshalter 4 aufgesetzt; beide Teile 3 und 4 werden wiederum mittels einer lösbaren Steckverbindung verbunden. Schließlich wird auf den Abstandshalter 4 die Kabelhalter-Einheit 5 aufgesetzt, wobei der Abstandshalter 4 und die Kabelhalter-Einheit 5 auch durch eine lösbare Steckverbindung miteinander verbunden werden. Alle Elemente weisen eine Bohrung 11 ,11' (FIG.3c, FIG.4; FIG.2B, FIG.6) mit der Achse A zur Einführung eines Sicherungsbolzens auf. Der Sicherungsbolzen verriegelt die zuvor erwähnten Steckverbindungen zwischen Fußteil 2/Kabelhalter-Einheit 3, Kabelhalter-Einheit 3/ Abstandshalter 4, Abstandshalter 4/ Kabelhalter-Einheit 5; außerdem ist eine lösbare Verbindung zwischen dem Sicherungsbolzen 6 und der obersten Kabelhalter-Einheit 5 vorgesehen, damit sich der Sicherungsbolzen nicht aus der Kabelhalteranordnung lösen kann. Die Steckverbindungen gestatten im unverriegelten Zustand eine gegenseitige Verdrehung der übereinander angeordneten Elemente 2,3,4,5 um die Achse A. Dabei gelangen die Elemente in zueinander wählbare Dreh-Rast-Positionen. Hierfür sind auf der Oberseite des Fußteils 2, der Kabelhalter-Einheiten 3 und 5 und des Abstandshalters 4 Rastpositionen 8, und auf der Unterseite der Kabelhalter-Einheiten 3 und 5 und des Abstandshalters 4 Rastzähne 9 ausgebildet, wobei die Rastelemente 9 auf der Unterseite des oberen Teils in die Rastpositionen 8 auf der Oberseite des unteren Teils zur Bildung einer wählbaren Dreh-Rast-Position eingreifen.

Im Ausführungsbeispiel gemäß FIG.1 greifen die Rastzähne 9 auf der Unterseite der Kabelhalter-Einheit 3 in die Rastpositionen 8 auf der Oberseite des Fußteils 2 ein; die Rastzähne 9 auf der Unterseite des Abstandshalters 4 in die Rastpositionen 8 auf der Oberseite der Kabelhalter-Einheit 3; die Rastzähne 9 auf der Unterseite der Kabelhalter-Einheit 5 in die Rastpositionen 8 auf der Oberseite des Abstandhalters 4. Ausgewählte Rastpositionen werden durch den in die Kabelhalter-Anordnung eingeführten Sicherungsbolzen fixiert durch Verriegelung der Steckverbindung zwischen den Elementen.

Kabelhalter-Einheiten bestehen aus einem Basisteil und mindestens einem mit diesem Basisteil fest verbundenen Kabelhalter. Die Kabelhalter-Einheit 3 hat zwei, die Kabelhalter-Einheit 5 nur einen Kabelhalter. Die Basisteile der Kabelhalter-Einheiten und die Abstandshalter haben vorzugsweise die gleiche Bauart. Die kreisringförmig randwärts auf der Oberseite der Basisteile, Abstandshalter und des Fußteils ausgebildeten Rastpositionen ermöglichen eine höhere Rastpositionsdichte als es in der Kabelhalteranordnung gemäß der Europäischen Patentschrift EP 1 772 935 B1 der Fall ist. Dort erfolgt die Rastverbindung zwischen Rast-Elementen am Federarm eines Steckverbinders und den Rastpositionen an der Innenwandung einer Aussparung zur Aufnahme des Steckverbinders. In dieser Aussparung lassen sich jedoch aus Abmessungsgründen weniger Rastpositionen unterbringen als es bei den kreisringförmig randwärts auf der Oberseite der Basisteile, Abstandshalter und des Fußteils ausgebildeten Rastpositionen der Fall ist.

Durch entsprechende Anordnung von Kabelhaltern in einer gewünschten Höhe über dem Fußteil und durch ihre Ausrichtung in bestimmte Dreh-Rast-Positionen kann die Kabelhalter-Anordnung vorgegebenen Kabelverläufen angepaßt werden.

Jedes Basisteil 3B und 5B der Kabelhalter-Einheit 3 und 5, sowie der Abstandshalter 4 weist auf seiner Unterseite einen Steckverbinder 7 auf.

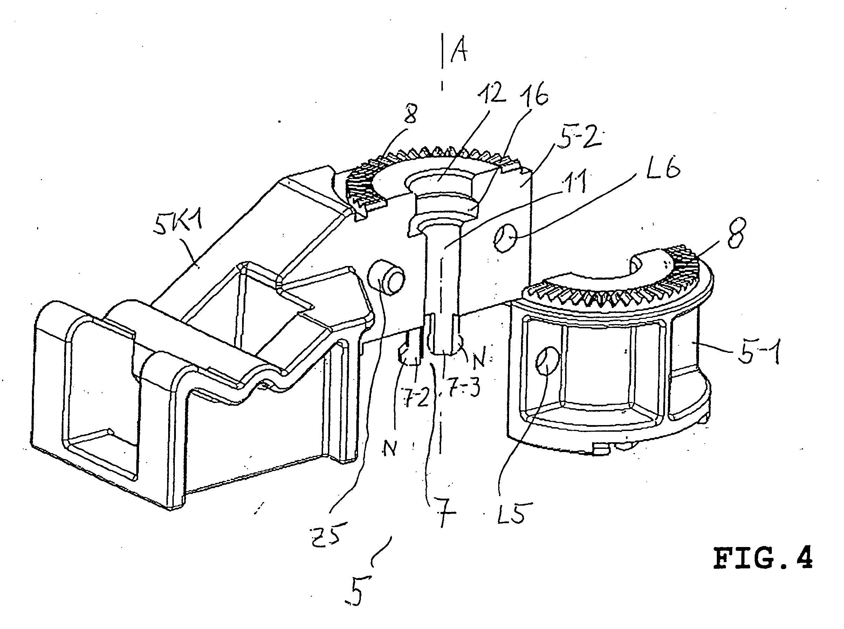

Dieser umfaßt vier Federarme 7-1, 7-2, 7-3 und 7-4, an dessen Enden Rastnasen N ausgebildet sind (FIG.3B, FIG.3C, FIG.4).Die Federarme sind konzentrisch zur Bohrung 11 mit der Achse A angeordnet, welche der Aufnahme des Sicherungsbolzen dient.

Jedes Basisteil 3B und 5B der Kabelhalter-Einheit 3 und 5, sowie der Abstandshalter 4 und das Fußteil 2 weist auf seiner Oberseite eine bohrungsähnliche Aussparung 12 zur Aufnahme eines Steckverbinders (eines darüberliegenden Basisteils oder Abstandshalters) auf (FIG.3A, FIG.3C, FIG.4) .

Diese bohrungsähnliche Aussparung 12 ist auf die Achse A der Bohrung 11 (bzw 11' im Fußteil 2) ausgerichtet.

In der Innenwand der Aussparung 12 ist eine konzentrische Rastnut 16 ausgebildet. In diese Rastnut rasten die Nasen N der Federarme 7-1, 7-2, 7-3 und 7-4 eines Steckverbinders 7 ein, wenn dieser in die Aussparung 12 gesteckt wird.

Durch eine solche Steckverbindung erfolgt die Verbindung zwischen dem Fußteil 2 und der Kabelhalter-Einheit 3, zwischen der Kabelhalter-Einheit 3 und dem Abstandshalter 4, dem Abstandshalter 4 und der Kabelhalter-Einheit 5.

Diese Verbindung kann - vorzugsweise ohne Werkzeugeinsatz - gelöst werden durch Auseinanderziehen der miteinander verbundenen Teile - solange der Sicherungsbolzen noch nicht in die Kabelhalter-Anordnung eingeführt ist.

Dabei gleitet die Schräge der Rastnase N eines Federarmes über die (vorzugsweise) abgeschrägte Rastnut(16)kante und der Steckverbinder 7 kann aus der Aussparung 12 herausgezogen werden.

Der eingeführte Sicherungsbolzen 6 würde ein Lösen der Steckverbindung verhindern, weil er das Zurückweichen der Rastnasen N an den Federarmen aus der Rastnut 16 verhindert und somit die Steckverbindung verriegelt.

Durch gegenseitige Verdrehung der Kabelhalter-Einheiten 3 und 5 und des Abstandshalters 4 auch gegenüber dem Fußteil um die Achse A in wählbare Dreh-Rast-Positionen lassen sich die Kabelhalter 3K1, 3K2 und 5K1 in gewünschte Positionen für vorgegebene Kabelverläufe bringen.

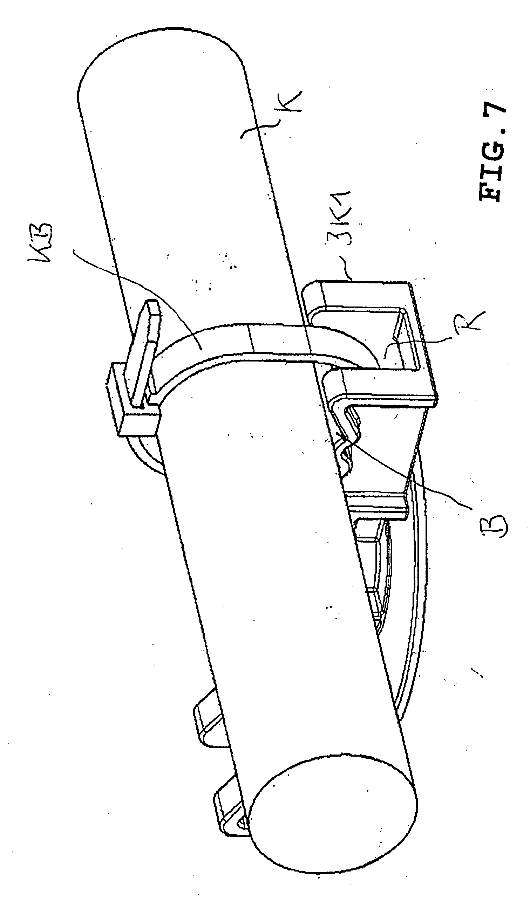

Die Kabelhalter dienen der Auflage und Befestigung von Kabeln, z.B. mit Kabelbindern (s. FIG.7).

In anderen Ausführungsformen der Erfindung (nicht dargestellt) können die Rastpositionen auch auf der Unterseite der Basisteile und Abstandshalter und die Rast-Elemente (mindestens 1 Rast-Element) auf der Oberseite der Basisteile, der Abstandshalter und des Fußteils ausgebildet sein.

Von der konzentrischen Anordnung der Rastpositionen und Rast-Elemente kann abgewichen werden. Es sind alle anderen Anordnungen möglich, die auswählbare Dreh-Rast-Positionen garantieren.

Ebenso ist es auch möglich, den Steckverbinder auf der Oberseite der Basisteile, der Abstandshalter und des Fußteils anzuordnen und die Aussparung zur Aufnahme eines solchen Steckverbinders auf der Unterseite der Basisteile und der Abstandshalter.

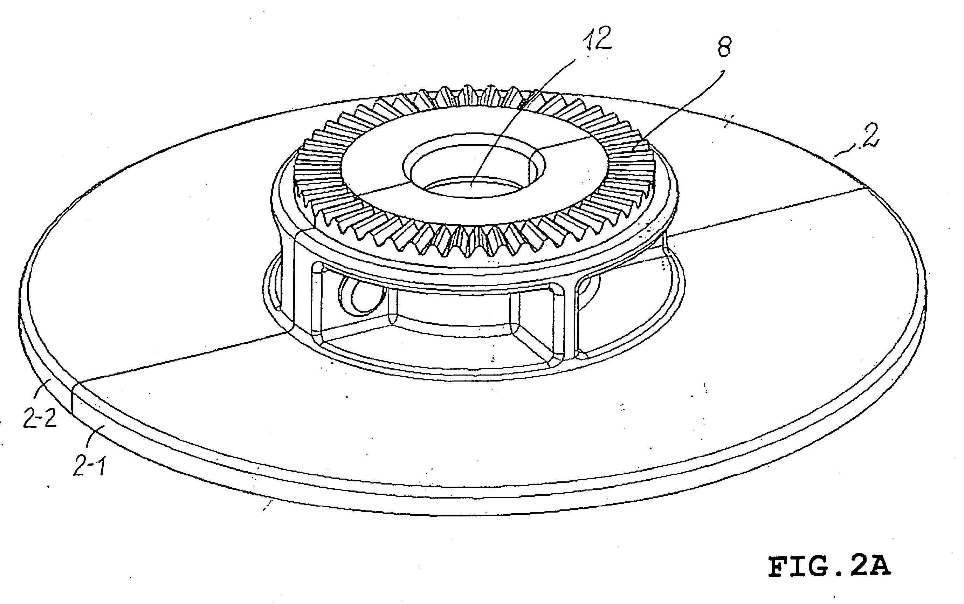

FIG.2A zeigt
eine isometrische Darstellung des Fußteils 2 mit Blick auf dessen Oberseite. Die Grundplatte des Fußteils 2 dient der Befestigung auf einer Boden-, Wand- oder Deckenplatte , z.B. durch Verkleben, Vernietung u.a.m.

Auf (über) dem Fußteil 2 wird gemäß FIG. 1 die Kabelhalter-Einheit 3 angeordnet und mit ihm verbunden. Ebenso ist es jedoch auch möglich, einen Abstandshalter oder eine andere Kabelhalter-Einheit auf dem Fußteil anzuordnen.

Die Oberseite des Fußteils 2 weist eine bohrungsähnliche Aussparung 12 zur Aufnahme eines Steckverbinders 7 (z.B. den von der Kabelhalter-Einheit 3) auf. Auf der Oberseite des Fußteils 2 sind in einem kreisringartigen Bereich Rastpositionen 8 mit sägezahnähnlichen Profil ausgebildet.

Die Aussparung 12, der kreisringartige Bereich mit den Rastpositionen und der Steckverbinder 7 sind auf die gedachte Achse A der Bohrung 11 bzw 11' ausgerichtet, in welche der Sicherungsbolzen 6 eingeführt wird.

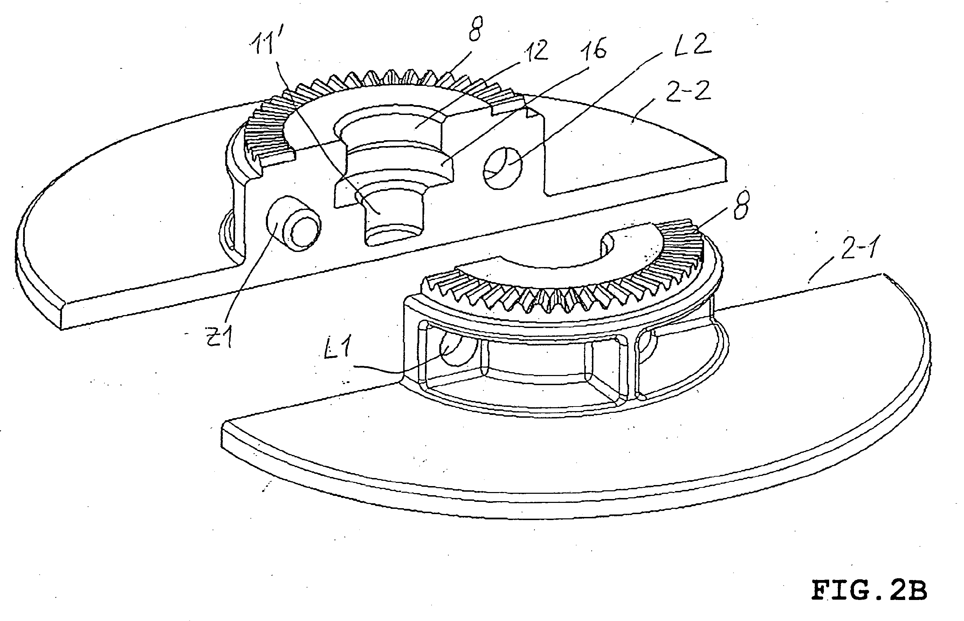

FIG 2B zeigt
eine isometrische Darstellung des aus zwei identischen Hälften 2-1 und 2-2 bestehenden Fußteils 2.

Beide Hälften 2-1, 2-2 sind über entsprechende Loch/Zapfen-Verbindungen zusammenfügbar (Zapfen Z1 /Loch L1; Zapfen der Hälfte 2-1 -nicht sichtbar-/ Loch L2).

Die bohrungsähnliche Aussparung 12 mit der Rastnut 16 dient der Aufnahme eines gedachten Steckverbinders 7 eines anderen BauElements; das gedachte Sicherungsbolzen(6)ende verläuft durch die Aussparung 12 und ist in der Bohrung 11' geführt. Die Rastpositionen sind mit 8 gekennzeichnet. Das Fußteil 2 sowie das Basisteil kann auch einstückig ausgeführt sein.

FIG. 3A zeigt
eine isometrische Darstellung der Kabelhalter-Einheit 3, hier mit zwei Kabelhaltern 3K1 und 3K2, mit Blick auf deren Oberseite.

Die bohrungsähnliche Aussparung 12 dient der Aufnahme des Steckverbinders 7 des über der Kabelhalter-Einheit 3 in FIG. 1 angeordneten Abstandshalters 4.

Die Kabelhalter-Einheit 3 umfaßt das Basisteil 3B und die Kabelhalter 3K1 und 3K2. Basisteil und Kabelhalter sind fest miteinander verbunden oder gemeinsam als ein Stück ausgeführt.

Auf der Oberseite des Basisteils sind Rastpositionen 8 mit sägezahnähnlichen Profil in einem kreisringförmigen Bereich konzentrisch zu der gedachten Achse A der bohrungsähnlichen Aussparung 12 ausgebildet.

FIG. 3B zeigt
eine isometrische Darstellung der Kabelhalter-Einheit 3 gemäß FIG. 3A mit Blick auf deren Unterseite.

Der Steckverbinder 7 umfaßt vier Federarme 7-1, 7-2, 7-3, 7-4, welche konzentrisch um die gedachte Achse A angeordnet sind. Am Ende der Federarme ist jeweils eine Rastnase N ausgebildet. Beim Einführen des Steckverbinders 7 der Kabelhalter-Einheit 3 in eine entsprechende Aussparung 12, z.B.des Fußteils 2, gelangen die Rastnasen in die an der Innenwand der Aussparung 12 ausgebildete konzentrische Rastnut 16.

Auf der Unterseite des Basisteils 3B (FIG. 3A, FIG. 3B) sind Rastelemente 9 gruppenweise konzentrisch um die gedachte Achse (A) angeordnet.

Die Rastelemente 9 sind dazu bestimmt, in die Rastpositionen 8 auf der Oberseite - hier - des Fußteils 2 an einer auswählbaren Dreh-Rast-Position einzugreifen.

FIG.3C zeigt
eine isometrische Darstellung der aus zwei identischen Hälften 3-1 und 3-2 bestehenden Kabelhalter-Einheit 3 gemäß FIG. 3B. Die identisch gefertigten Hälften 3-1 und 3-2 können durch Zapfen / Loch Verbindungen zusammengefügt werden (Zapfen Z3/Loch L3; Zapfen der Hälfte 3-1 -nicht sichtbar- / Loch L4).Die Federarme mit den Rastnasen N sind wie auch in FIG 3B mit 7-1,7-2,7-3 und 7-4 gekennzeichnet.

Die Durchgangsbohrung 11 dient dem Hindurchführen bzw der Aufnahme des Sicherungsbolzens 6 . Die bohrungsähnliche Aussparung für die Aufnahme des Steckverbinders 7 des Abstandshalters 4 ist mit 12, die Rastnut mit 16 gekennzeichnet.

Für diese Kabelhalter-Einheit kommt auch eine einteilige Bauweise in Betracht.

FIG.4 zeigt
eine isometrische Darstellung der aus zwei ungleichen Teilen 5-1 und 5-2 zusammengesetzten Kabelhalter-Einheit 5 mit einem Kabelhalter 5K1, mit Blick auf die Oberseite.

Die bohrungsähnliche Aussparung zur Aufnahme eines gedachten Steckverbinders ist mit 12, die Rastnut mit 16 und die Rastpositionen sind mit 8 gekennzeichnet. Auf der Unterseite des Bauteils 5-2 sind die Federarme 7-2 und 7-3 des Steckverbinders 7 mit den Rastnasen N angeordnet. Die anderen Federarme 7-1 und 7-4 am Bauteil 5-1 sind in dieser Darstellung nicht sichtbar.

Die Verbindung beider Teile 5-1 und 5-2 erfolgt über die Zapfen/ Loch-Verbindungen Zapfen Z5/L5 und Zapfen am Teil 5-1 nnicht sichtbar-/Loch L6.

Die Bohrung 11 dient der Führung des Sicherungsbolzens 6.

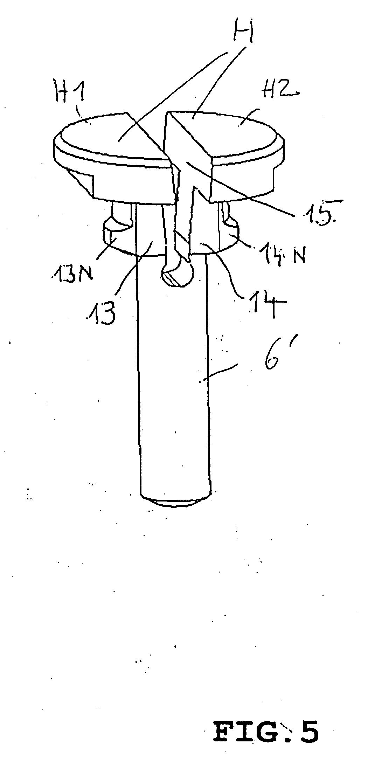

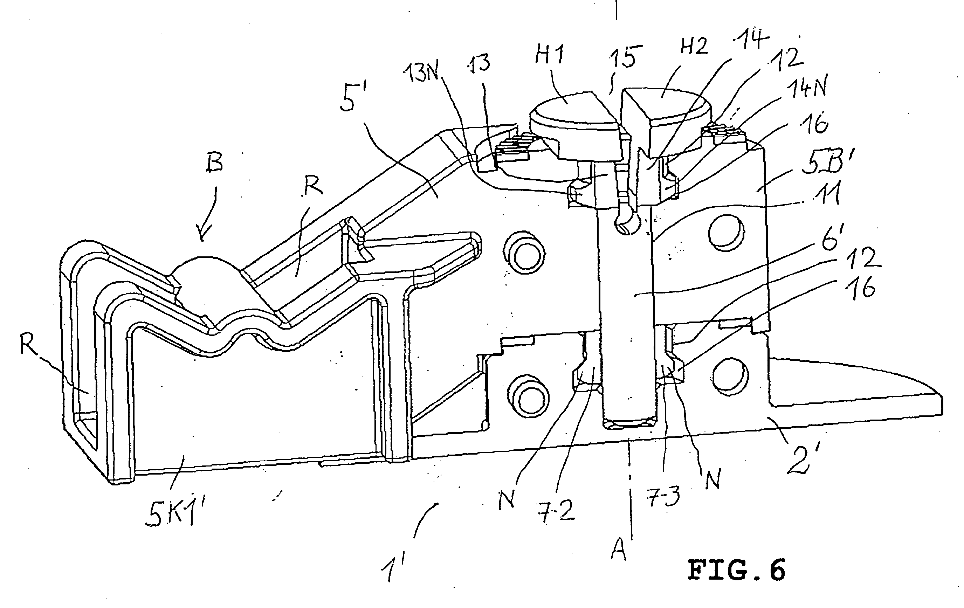

FIG. 5 zeigt
eine isometrische Darstellung des Sicherungsbolzens 6', passend zu der in FIG. 6 dargestellten Kabelhalter-Anordnung.

Der Kopf H dieses Bolzens und sein kopfnaher Bereich ist durch einen Spalt 15 längsgeteilt. Die durch den Spalt 15 beabstandeten Bolzen-Längs-Teile 13 und 14 bilden Federarme, an denen Rastnasen 13N und 14 N ausgebildet sind. Diese Rastnasen greifen - wenn der Sicherungsbolzen vollends in die Kabelhalter-Anordnung 1' eingeführt ist; der Bolzenkopf schlägt dann am obersten Kabelhalter 5' an- in die Rastnut 16 der bohrungsähnlichen Aussparung 12 ein. In dieser Position kann sich der Sicherungsbolzen nicht aus der Kabelhalter-Anordnung 1' lösen.

Zum Lösen des Sicherungsbolzens 6' werden die beiden beabstandeten Kopfteile H1 und H2 gegen die Federkraft der Bolzen-Längs-Teile 13 und 14 zusammengedrückt. Dabei gelangen - - eine entsprechende Spaltbreite vorausgesetzt- die Rastnasen 13N und 14N aus der Rastnut 16, so daß der Sicherungsbolzen aus der Bohrung 11 und 11' der Kabelhalter-Anordnung 1' herausgezogen werden kann.

Da der Sicherungsbolzen je nach Höhe der Kabelhalteranordnung unterschiedlich lang sein muß, ist es zweckmäßig einen Sicherungsbolzen 6 maximaler Länge mit Sollbruchstellen S (FIG.1) zu verwenden. Diese dienen der manuellen Verkürzung seiner Länge in Anpassung an die aktuelle Höhe der KabelHalteranordnung 1 für eine geringere Anzahl von Kabelhalter-Einheiten und Abstandshaltern.

FIG. 6 zeigt
eine isometrische Teil-Schnittdarstellung einer erfindungs gemäßen Kabelhalter-Anordnung 1'. Sie umfaßt einen Fußteil 2', eine Kabelhalter-Einheit 5', bestehend aus dem Basisteil 5B' mit dem Kabelhalter 5K1', und den Sicherungs-Bolzen 6'.

Der Kabelhalter weist ein Bett B zur Auflage von Kabeln o. dgl. auf, welche von einem Kabelbinder (s. FIG. 7) o.ä. zusammengehalten und am Kabelhalter befestigt werden.

Der Kabelbinder wird durch Aussparungen R des Kabelhalters geführt, damit sich die Kabel nicht vom Kabelhalter lösen können.

Der Sicherungsbolzen 6' verriegelt die Steckverbindung zwischen dem Fußteil 2' und der Kabelhalter-Einheit 5', indem er verhindert, daß sich die Rastnasen N der Federarme (in FIG.6 sind nur zwei davon 7-2 und 7-3 sichtbar) des Steckverbinders aus der Rastnut 16 der bohrungsähnlichen Aussparung 12 im Fußteil 2' lösen können.

Außerdem wird die Lage des Sicherungsbolzens in der Kabelhalter-Anordnung 1' dadurch gesichert, daß die Rastnasen 13N und 14 N an den federnden Bolzen-Längsteilen 13 und 14 in die Rastnut 16 der Aussparung 12 der Kabelhalter-Einheit 5' eingreifen.

FIG. 7 zeigt
eine isometrische Darstellung eines mit einem Kabelbinder KB auf einem Kabelhalter 3K1 befestigten Kabelbündels K.

Das Kabelbündel K o.ä. ist im Bett B des Kabelhalters 3K1 angeordnet und wird dort in seiner Lage fixiert, z.B. durch einen Kabel-Binder KB o.ä. Dabei wird der Kabelbinder KB durch entsprechende Aussparungen R des Kabelhalters geführt, so daß sich ein von ihm umfaßtes Kabel K nicht vom Kabelhalter lösen kann.

In ihrer allgemeinsten Form ist die erfindungsgemäße Kabelhalter-Anornung durch folgende Merkmale gekennzeichnet:
Die Kabelhalter-Anordnung 1, 1' umfaßt mindestens eine Kabelhalter-Einheit 3, 5, 5', bestehend aus einem Basisteil 3B, 5B, 5'B und mindestens einem mit diesem Basisteil fest verbundenen Kabelhalter 3K1,3K2,5K1,5K1', sowie ein Fußteil 2, wahlweise auch Abstandshalter 4, und einen dem Basisteil, dem Fußteil und dem Abstandshalter gemeinsamen Sicherungsbolzen 6,6'.

Auf dem Fußteil 2 sind Kabelhalter-Einheiten 3,5,5' und Abstandshalter 4 in übereinander wählbarer Reihenfolge anordnungsbar.

Das Fußteil 2 ist fest mit einer Boden-, Wand oder Deckenplatte o.ä. verbindbar.

Das Basisteil 3B,5B, 5B' der Kabelhalter-Einheit 3,5,5' und der Abstandshalter 4 weisen eine Ober- und Unterseite und eine Durchgangsbohrung 11 auf.

Das Fußteil (2) weist eine Oberseite und eine Bohrung 11' auf. Die Durchgangsbohrungen aller Basisteile und Abstandshalter sowie die Bohrung im Fußteil sind bezüglich einer gemeinsamen gedachten Achse A aufeinander ausgerichtet zur Aufnahme des Sicherungsbolzens 6,6'.

Der Sicherungsbolzen 6,6' ist vom oberste freien dem Fußteil 2 abgewandten Ende der Kabelhalter-Anordnung her in die Bohrung 11, 11' einführbar.

Das Fußteil 2 ist mit einem direkt darüber anordnungsbaren Basisteil 3B einer Kabelhalter-Einheit 3 bzw mit einem direkt darüber anordnungsbaren Abstandshalter durch einen lösbaren verriegelbaren Steckverbinder 7 verbindbar.

Ein Bassisteil einer Kabelhalter-Einheit bzw. ein Abstandshalter ist mit einem direkt darüber anordnungsbaren Basisteil einer Kabelhalter-Einheit bzw mit einem direkt darüber anordnungsbaren Abstandshalter durch einen lösbaren verriegelbaren Steckverbinder 7 für eine Steckverbindung verbindbar, wobei übereinander angeordnete Basisteile bzw. Abstandshalter in unverriegelter Position gegeneinander um die Achse A verdrehbar sind.

Auf der Oberseite des Fußteiles, eines Basisteils und eines Abstandshalters sind achsen(A)bezogene Dreh-Rastpositionen 8 bzw mindestens ein Rast-Element ausgebildet; auf der Unterseite eines Basisteils und eines Abstandhalters sind mindestens ein Rast-Element 9 bzw achsen(A)bezogene Dreh-Rastpositionen ausgebildet, wobei bei direkt übereinander angeordneten Teilen - Fußteil/ Basisteil; Fußteil/Abstandshalter; Basisteil/ Basisteil; Basisteil/ Abstandshalter; Abstandshalter/ Basisteil; Abstandshalter/ Abstandshalter - die Rast-Elemente auf der Unterseite des oberen Teils in die Rastpositionen auf der Oberseite des unteren Teils durch Drehung übereinander angeordneter Teile um die Achse A zur Bildung einer wählbaren Dreh-Rast-Position eingreifbar sind bzw.
wobei die Rast-Elemente auf der Oberseite des unteren Teils in die Rastpositionen auf der Unterseite des oberen Teils durch Drehung übereinander angeordneter Teile um die Achse A zur Bildung einer wählbaren Dreh-Rast-Position eingreifbar sind. Zwischen dem Sicherungsbolzen 6,6' und dem obersten Basisteil 5B am freien dem Fußteil 2 abgewandten Ende der Kabelhalter-Anordnung 1 ist eine lösbare Bolzen-Verbindung 13N/16, 14N/16 vorgesehen.

Durch den in die Kabelhalter-Anordnung einführbaren Sicherungsbolzen 6, 6' ist die Steckverbindung mit dem Steckverbinder verriegelbar und die Bolzen-Verbindung bewirkbar.

Die an sich bekannte Steckverbindung umfaßt einen Steckverbinder 7 mit mindestens einem Federarm 7-1, 7-2, 7-3, 7-4 mit einer Rastnase N und eine in der Innenwand einer Steckverbindungs-Bohrung 12 konzentrisch verlaufende Rastnut 16 umfaßt, wobei der Federarm 7-1,7-2,7-3,7-4 in die Bohrung 12 einführbar ist zum Eingriff der Rastnase N in die Rastnut 16. Die Steckverbindungsbohrung 12 und die Bohrung 11, 11' zur Aufnahme des Sicherungsbolzens 6,6' haben die gleiche gedachte Achse A.

Der Sicherungsbolzen 6' weist einen Kopf H auf: Dieser Kopf und der kopfnahen Bereich des Sicherungsbolzens ist durch einen Spalt 15 längsgeteilt ist, wobei die durch den Spalt 15 beabstandeten Bolzen-Längs-Teile 13,14 Federarme bilden, an denen Rastnasen 13N,14N ausgebildet sind. Im Basisteil 5B' ist eine in der Innenwand einer Bohrung 12 mit der Achse A konzentrisch verlaufende Rastnut 16 vorgesehen zum Eingriff der Rastnasen 13N,14N der Federarme 13,14, wenn der Sicherungsbolzen 6' in die Bohrung 12 des obersten Basisteils in der Kabelhalter-Anordnung bis zum Kopf(H)anschlag eingeführt ist.

Ein Lösen der Bolzenverbindung 13N/16;14N/16 mit dem obersten Basisteil erfolgt durch Zusammendrücken beider Bolzen-Kopfteile H1, H2, wobei sich die Rastnasen 13N,14N aus der Rastnut 16 lösen und der Sicherungsbolzen 6' aus der Bohrung 11,12 herausziehbar ist.

Der Sicherungsbolzen 6 weist Sollbruchstellen S zur manuellen Verkürzung seiner Länge in Anpassung an die Höhe der KabelHalteranordnung 1 auf.

Das Fußteil 2, die Kabelhalter-Einheit 3 und der Abstandshalter 4 sind einteilig ausgeführt oder aus zwei identischen Hälften (2-1, 2-2; 3-1,3-2) zusammensetzbar; die Kabelhalter-Einheit 5 kann auch aus zwei ungleichen Teilen 5-1, 5-2 zusammensetzbar sein.

Die identischen Hälften oder die ungleichen Teile sind über Loch/Zapfenverbindungen zusammenfügbar.

Das Basisteil 3B,5B einer Kabelhalter-Einheit 3,5 und der Abstandshalter 4 sind vorzugsweise baugleich.

Die Kabelhalter-Anordnung ist aus Kunststoff,vorzugsweise aus Polyetherimid, gefertigt.

## Patentansprüche

1. Kabelhalter-Anordnung (1, 1') mit übereinander anordnungsbaren Kabelhalter-Einheiten (3B, 5B, 5B'), welche jeweils eine aufeinander ausgerichtete Bohrung mit einer gedachten Achse A zur Aufnahme eines allen Kabelhalter-Einheiten (3B, 5B, 5B') gemeinsamen Sicherungsbolzens (6, 6') aufweisen, wobei die Kabelhalter-Einheiten (3B, 5B, 5B') in unterschiedlichen auf die Achse A bezogene Drehpositionen ausrichtbar sind,
**dadurch gekennzeichnet,**
**dass** die Kabelhalter-Anordnung (1, 1')
ein Fußteil (2), mindestens eine Kabelhalter-Einheit (3B, 5B, 5B'), wahlweise mindestens einen Abstandshalter (4) einen Sicherungsbolzen umfasst,
wobei die Kabelhalter-Einheit (3B, 5B, 5B') ein Basisteil (3B, 5B, 5B') und mindestens einen mit diesem Basisteil (3B, 5B, 5B') fest verbundenen Kabelhalter (3K1, 3K2, 5K1, 5K1') umfasst,
**dass** dem Fußteil (2), dem Basisteil (3B, 5B, 5B') und dem Abstandshalter (4) der Sicherungsbolzen (6, 6') gemeinsam ist,
wobei das Basisteil /die Basisteile über dem Fußteil angeordnet ist / sind und wobei der / die Abstandshalter zwischen dem Fußteil (2) und dem darüber angeordneten Basisteil oder zwischen übereinander angeordneten Basisteilen angeordnet ist/ sind,
**dass** auf dem Fußteil (2) Kabelhalter-Einheiten (3, 5, 5') und Abstandshalter (4) in übereinander wählbarer Reihenfolge anordnungsbar sind,
**dass** das Fußteil (2) fest mit einer Boden-, Wand- oder Deckenplatte o.ä. verbindbar ist,
**dass** das Basisteil (3B, 5B, 5B') der Kabelhalter-Einheit (3, 5, 5') und der Abstandshalter (4) eine Ober- und Unterseite und eine Durchgangsbohrung (11) aufweisen,
**dass** das Fußteil (2) eine Oberseite und eine Bohrung (11') aufweist,
**dass** die Durchgangsbohrungen aller Basisteile und Abstandshalter sowie die Bohrung im Fußteil (2) bezüglich einer gemeinsamen gedachten Achse aufeinander ausgerichtet sind zur Aufnahme des Sicherungsbolzens (6,6');
**dass** der Sicherungsbolzen (6, 6') vom obersten freien dem Fußteil (2) abgewandten Ende der Kabelhalter-Anordnung her in die Bohrung (11, 11') einführbar ist,
**dass** das Fußteil (2) mit einem direkt darüber anordnungsbaren Basisteil (3B) einer Kabelhalter-Einheit (3) bzw mit einem
direkt darüber anordnungsbaren Abstandshalter durch einen lösbaren verriegelbaren Steckverbinder (7) verbindbar ist,
**dass** ein Basisteil einer Kabelhalter-Einheit bzw.
**dass** ein Abstandshalter
mit einem direkt darüber anordnungsbaren Basisteil einer Kabelhalter-Einheit bzw mit einem direkt darüber anordnungsbaren Abstandshalter durch eienen lösbaren verriegelbaren Steckverbinder (7) für eine Steckverbindung
verbindbar ist,
wobei übereinander angeordnete Basisteile bzw. Abstandshalter in unverriegelter Position gegeneinander um die Achse A verdrehbar sind,
**dass** auf der Oberseite des Fußteils, eines Basisteils und
eines Abstandshalters achsen (A) bezogene Dreh-Rastpositionen (8) bzw. mindestens ein Rast-Element ausgebildet sind,
**dass** auf der Unterseite eines Basisteils und eines
Abstandshalters mindestens ein Rast-Element (9) bzw
achsenbezogenene Dreh-Rastpositionen ausgebildet sind,
wobei bei direkt übereinander angeordneten Teilen - Fußteil/ Basisteil; Fußteil/ Abstandshalter;
Basisteil / Basisteil; Basisteil/ Abstandshalter;
Abstandshalter / Basisteil; Abstandshalter/ Abstandshalter -
die Rast-Elemente auf der Unterseite des oberen Teils in die Rastpositionen auf der Oberseite des unteren Teils durch
Drehung übereinander angeordneter Teile um die Achse A zur Bildung einer wählbaren Dreh-Rast-Position eingreifbar sind bzw.
die Rast-Elemente auf der Oberseite des unteren Teils in die Rastpositionen auf der Unterseite des oberen Teils durch
Drehung übereinander angeordneter Teile um die Achse A zur Bildung einer wählbaren Dreh-Rast-Position eingreifbar sind, daß eine lösbare Bolzen-Verbindung (13N/16, 14N/16) zwischen dem Sicherungsbolzen (6, 6') und dem obersten Basisteil (5B) am freien dem Fußteil (2) abgewandten Ende der Kabelhalter-Anordnung (1) vorgesehen ist,
und **dass** durch den in die Kabelhalter-Anordnung einführbaren Sicherungsbolzen (6, 6') die Steckverbindung mit dem Steckverbinder verriegelbar und die Bolzen-Verbindung bewirkbar ist.

2. Anordnung nach Anspruch 1,
**dadurch gekennzeichnet, dass**
die Steckverbindung einen Steckverbinder (7) mit mindestens einem Federarm (7-1, 7-2, 7-3, 7-4) mit einer Rastnase (N) und eine in der Innenwand einer Steckverbindungs-Bohrung (12) konzentrisch verlaufende Rastnut (16) umfaßt, wobei der Federarm (7-1,7-2,7-3,7-4) in die Bohrung (12) einführbar ist zum Eingriff der Rastnase (N) in die Rastnut (16) und daß die Steckverbindungsbohrung (12) und die Bohrung (11, 11') zur Aufnahme des Sicherungsbolzens (6,6') die gleiche gedachte Achse A haben.

3. Anordnung nach Anspruch 1,
**dadurch gekennzeichnet, dass**
daß der Sicherungsbolzen (6') einen Kopf (H) aufweist,
daß dieser Kopf und der kopfnahen Bereich des Sicherungsbolzens durch einen Spalt (15) längsgeteilt ist, wobei die durch den Spalt (15) beabstandeten Bolzen-Längs-Teile (13,14) Federarme bilden, an denen Rastnasen (13N,14N) ausgebildet sind,
und daß im Basisteil (5B') eine in der Innenwand einer Bohrung (12) mit der Achse A konzentrisch verlaufende Rastnut (16) vorgesehen ist zum Eingriff der Rastnasen (13N,14N) der Federarme (13,14), wenn der Sicherungsbolzen (6') in die Bohrung (12) des obersten Basisteils in der Kabelhalter-Anordnung bis zum Kopf(H)anschlag eingeführt ist.

4. Anordnung nach Anspruch 3,
**dadurch gekennzeichnet, dass** ein Lösen der Bolzenverbindung (13N/16;14N/16) vom dem obersten Basisteil durch Zusammendrücken beider Bolzen-Kopfteile (H1, H2) erfolgt, wobei sich die Rastnasen (13N,14N) aus der Rastnut (16) lösen und der Sicherungsbolzen (6') aus der Bohrung (11,12) herausziehbar ist.

5. Anordnung nach Anspruch 1,
**dadurch gekennzeichnet, dass**
der Sicherungsbolzen (6) Sollbruchstellen (S) zur manuellen Verkürzung seiner Länge in Anpassung an die Höhe der Kabel-Halteranordnung (1) aufweist.

6. Anordnung nach Anspruch 1,
**dadurch gekennzeichnet, dass** die mit einem Basis-Teil (3B,5B,5B') fest verbundenen Kabelhalter (3K1,3K2,5K1,5K1') ein Bett (B) zur Aufnahme von Kabeln o.ä. aufweisen und Durchbrüche (R) zur Durchführung eines Kabelbinders o.ä.

7. Anordnung nach Anspruche 1,
**dadurch gekennzeichnet, dass** das Fußteil (2), die Kabelhalter-Einheit (3) und der Abstandshalter einteilig ausgeführt oder aus zwei identischen Hälften (2-1, 2-2; 3-1,3-2) zusammensetzbar sind oder daß die Kabelhalter-Einheit (5) aus zwei ungleichen Teilen (5-1, 5-2) zusammensetzbar ist.

8. Anordnung nach Anspruch 7,
**dadurch gekennzeichnet, dass** die identischen Hälften oder die ungleichen Teile über Loch/Zapfenverbindungen zusammenfügbar sind.

9. Anordnung nach Anspruch 1,
**dadurch gekennzeichnet, dass**
das Basisteil (3B,5B) einer Kabelhalter-Einheit (3,5) und der Abstandshalter (4) identisch sind.

10. Anordnung nach Anspruch 1,
dadurch gekennnzeichnet, dass
die Kabelhalter-Anordnung aus Kunststoff,vorzugsweise aus Polyetherimid, gefertigt ist.

## Claims

1. Cable-support arrangement (1, 1') with cable-supporting units (3B, 5B, 5B') which can be superimposed on one another, each of which has a bore aligned with the other bores, with an imaginary axis A for receiving a securing pin (6, 6') common to all the cable-supporting units (3B, 5B, 5B'), where the cable-supporting units (3B, 5B, 5B') can be aligned to different rotary positions with reference to the axis A, **characterised in:**
**that** the cable-support arrangement (1, 1') comprises a stand part (2), at least one cable-supporting unit (3B, 5B, 5B'), optionally at least one spacer (4) and a securing pin, where the cable-supporting unit (3B, 5B, 5B') comprises a base part (3B, 5B, 5B') and at least one cable support (3K1, 3K2, 5K1, 5K1') attached permanently to this base part (3B, 5B, 5B'), that the securing pin (6, 6') is common to the stand part (2), the base part (3B, 5B, 5B') and the spacer (4),
where the base part or base parts is/are arranged above the stand part and where the spacer or spacers is/are arranged between the stand part (2) and the base part arranged above or between base parts superimposed on one another,
**that** cable-supporting units (3B, 5B, 5B') and spacers (4) can be superimposed on one another in any order on the stand part (2),
**that** the stand part (2) can be connected permanently to a floor, wall, ceiling or similar element,
**that** the base part (3B, 5B, 5B') of the cable-supporting unit (3, 5, 5') and the spacer (4) have an upper and a lower side and a through hole (11),
**that** the stand part (2) has an upper side and a bore (11'), that the through holes of all the base parts and spacers and the bore in the stand part (2) are aligned with one another with reference to a common imaginary axis in order to receive the securing pin (6, 6');
**that** the securing pin (6, 6') can be inserted into the bore (11, 11') from the upper free end of the cable-support arrangement facing away from the stand part (2),
**that** the stand part (2) can be connected to a directly superimposed base part (3B) of a cable-supporting unit (3) or a directly superimposed spacer by means of a lockable and detachable plug-in connector (7),
**that** a base part of a cable-supporting unit or that a spacer can be connected to a directly superimposed base part of a cable-supporting unit or a directly superimposed spacer by means of a lockable and detachable plug-in connector (7) to form a plug-in connection,
where superimposed base parts or spacers in the unlocked position can be rotated with reference to one another around the axis A,
**that** axis (A)-related rotating and locking positions (8) or at least one locking element are formed on the upper side of a stand part, a base part and a spacer,
**that** at least one locking element (9) or axis-related rotation-locking positions are formed on the underside of a base part and a spacer,
where, with the directly superimposed parts, i.e. stand part and base part, stand part and spacer, base part and base part, base part and spacer, spacer and base part, and spacer and spacer, the locking elements on the lower side of the upper part engage with the locking positions on the upper side of the lower part by turning superimposed parts around the axis A in order to achieve a desired rotation-locking position, or the locking elements on the upper side of the lower part engage with the locking positions on the lower side of the upper part by turning superimposed parts around the axis A in order to achieve a desired rotation-locking position,
**that** a detachable pin connection (13N/16, 14N/16) is provided between the securing pin (6, 6') and the topmost base part (5B) at the free end of the cable-support arrangement (1) facing away from the stand part (2),
and **that** by means of the securing pin (6, 6') which can be inserted into the cable-support arrangement, the connection with the plug-in connector can be locked into place, thereby achieving the pin connection.

2. Arrangement in accordance with claim 1, **characterised in that** the plug-in connection comprises a plug-in connector (7) with at least one spring arm (7-1, 7-2, 7-3, 7-4) with an engaging tappet (N) and an engaging groove (16) running concentrically in the inner wall of the plug-connection bore (12), where the spring arm (7-1, 7-2, 7-3, 7-4) is insertable into the bore (12) for the engagement of the engaging tappet (N) in the engaging groove (16), and the plug-connection bore (12) and the bore (11, 11') for receiving the securing pin (6, 6') have the same imaginary axis A.

3. Arrangement in accordance with claim 1, **characterised in that** the securing pin (6') has a head (H), that this head and the area of the securing pin in the vicinity of the head are divided in the lengthwise direction by a gap (15), where the lengthwise parts of the pin (13, 14) separated by the gap (15) form spring arms on which engaging tappets (13N, 14N) are formed, and that in the base part (5B') a concentric engaging groove (16) is provided in the inner wall of a bore with axis A to permit engagement of the engaging tappets (13N, 14N) of the spring arms (13, 14) when the securing pin (6') is inserted into the bore (12) of the upper base part of the cable-support arrangement up to the stop limit for the head (H).

4. Arrangement in accordance with claim 3, **characterised in that** the pin connection (13N/16, 14N/16) is detached from the uppermost base part by pressing the two parts of the pin head (H1, H2) together in such a way that the engaging tappets (13N, 14N) are released from the engaging groove (16) and the securing pin (6') is pulled out of the bore (11, 12).

5. Arrangement in accordance with claim 1, **characterised in that** the securing pin (6) has pre-determined breaking points (S) for shortening it to fit the height of the cable-support arrangement (1).

6. Arrangement in accordance with claim 1, **characterised in that** the cable supports (3K1, 3K2, 5K1, 5K1') fixed to a base part (3B, 5B, 5B') have a bed (B) for holding cables etc. and through holes (R) to allow cable binders etc. to pass through.

7. Arrangement in accordance with claim 1, **characterised in that** the stand part (2), the cable-supporting unit (3) and the spacer are formed in one part or can be assembled from two identical halves (2-1, 2-2; 3-1, 3-2), or that the cable-supporting unit (5) can be assembled from two dissimilar parts (5-1, 5-2).

8. Arrangement in accordance with claim 7, **characterised in that** the identical halves or the dissimilar parts can be joined together by peg and hole joints.

9. Arrangement in accordance with claim 1, **characterised in that** the base part (3B, 5B) of a cable-supporting unit (3, 5) and the spacer (4) are identical.

10. Arrangement in accordance with claim 1, **characterised in that** the cable-support arrangement is made of plastic, preferably of polyetherimid.

## Revendications

1. Agencement de porte-câble (1, 1') avec des unités porte-câble (3B, 5B, 5B') superposables présentant chacune une percée orientée l'une vers l'autre avec un axe imaginaire A pour la réception d'un boulon de fixation (6, 6') traversant toutes les unités porte-câble (3B, 5B, 5B'), les unités porte-câble (3B, 5B, 5B') pouvant être alignées dans différentes position de rotation par rapport à l'axe A,
**caractérisé en ce que**
l'agencement porte-câble (1, 1')
comprend un socle (2), au moins une unité porte-câble (3B, 5B, 5B'), facultativement au moins une entretoise (4) et un boulon de fixation, l'unité porte-câble (3B, 5B, 5B') comprenant un élément de base (3B, 5B, 5B') et au moins un porte-câble (3K1, 3K2, 5K1, 5K1') relié solidement à ce socle (3B, 5B, 5B') ;
que le boulon de fixation (6, 6') est commun au socle (2), à l'élément de base (3B, 5B, 5B') et à l'entretoise (4), le ou les éléments de base étant disposé(s) sur le socle et la ou les entretoises étant disposée(s) entre le socle (2) et l'élément de base disposé sur celui-ci, ou entre des éléments de base superposés ;
que des unités porte-câble (3, 5, 5') et entretoises (4) peuvent être disposés sur le socle (2) l'un par-dessus l'autre dans un ordre librement choisi ;
que le socle (2) peut être connecté solidement avec une plaque de sol, de mur, de plafond ou autre surface similaire ;
que le dessous et le dessus de l'élément de base (3B, 5B, 5B') de l'unité porte-câble (3, 5, 5') et de l'entretoise (4) présentent une percée (11) ;
que le socle (2) présente une face supérieure et une percée (11') ;
que les percées de tous les éléments de base et entretoises, ainsi que la percée dans le socle (2), sont tous orientés l'un vers l'autre sur un même axe imaginaire pour accueillir le boulon de fixation (6, 6') ;
que le boulon de fixation (6, 6') peut être inséré dans la percée (11, 11') à partir de l'extrémité supérieure de l'agencement de porte-câble opposée au socle (2) ;
que le socle (2) peut être relié avec un élément de base (3B) d'une unité porte-câble (3) pouvant être disposée directement dessus, ou avec une entretoise pouvant être disposée directement dessus, à l'aide d'un connecteur (7) blocable/déblocable ;
qu'un élément de base ou une unité porte-câble ou
qu'une entretoise
peut être reliée avec un élément de base d'une unité porte-câble pouvant être disposé directement dessus, ou avec une entretoise pouvant être disposée directement dessus, à l'aide d'un connecteur (7) blocable/déblocable pour la liaison enfichable,
les éléments de base ou entretoises superposés en position débloquée pouvant être tournés l'un contre l'autre autour de l'axe (A) ;
que des crans de positionnement (8) ou au moins un élément d'encliquetage sont disposés autour de l'axe (A) sur le dessus du socle, d'un élément de base et d'une entretoise;
qu'au moins un élément d'encliquetage (9) ou des crans de positionnements sont disposés autour de l'axe au-dessous d'un élément de base et d'une entretoise,
les éléments d'encliquetage, lorsque les morceaux sont directement superposés - socle/élément de base ; élément de base/entretoise ; entretoise/élément de base ; entretoise/entretoise -, peuvent être mis en prise au-dessus de la pièce supérieure dans le cran de positionnement au-dessus de la pièce inférieure autour de l'axe A afin de former une position d'encliquetage librement sélectionnable, ou
que les éléments d'encliquetage sur le dessus de la pièce inférieure peuvent être mis en prises dans les crans de positionnement au-dessus de la pièce supérieure en faisant pivoter des pièces superposées autour de l'axe A afin de former une position d'encliquetage librement sélectionnable ;
qu'une liaison détachable à boulon (13N/16, 14N/16) entre le boulon de fixation (6, 6') et l'élément de base le plus élevé (5B) est présente à l'extrémité libre et opposée au socle (2) de l'agencement de porte-câble (1) ;
et que le boulon de fixation (6, 6') insérable dans l'agencement de porte-câble permet de bloquer la liaison enfichable avec le connecteur et de réaliser la liaison à boulon.

2. Agencement selon la revendication 1,
**caractérisé en ce que**
le connecteur comprend une liaison enfichable (7) avec au moins un bras à ressort (7-1, 7-2, 7-3, 7-4) avec un taquet d'encliquetage (N) et un écrou d'encliquetage (16) qui s'étend de façon concentrique dans la paroi interne d'une percée de liaison enfichable (12), le bras à ressort (7-1, 7-2, 7-3, 7-4) pouvant être introduit dans la percée (12) pour encliqueter le taquet d'encliquetage (N) dans l'écrou d'encliquetage (16) et que la percée de la liaison enfichable (12) et la percée (11, 11') ont le même axe A imaginaire pour accueillir le boulon de fixation (6, 6').

3. Agencement selon la revendication 1,
**caractérisé en ce que**
le boulon de fixation (6') présente une tête (H),
que cette tête et la zone du boulon de fixation qui est près de cette tête sont divisés dans le sens longitudinal par une fente (15), les pièces longitudinales du boulon (13, 14) séparés par la fente (15) formant des bras de ressort sur lesquels sont formés les taquets d'encliquetage (13N, 14N),
et qu'un écrou d'encliquetage (16) s'étendant de façon concentrique par rapport à l'axe A dans la paroi intérieure d'une percée (12) est prévu dans l'élément de base (5B') pour l'encliquetage des taquets d'encliquetage (13N , 14N) des bras de ressort (13, 14) lorsque le boulon de fixation (6') est introduit dans la percée (12) de l'élément de base le plus élevé dans l'agencement de porte-câble jusqu'à la butée de tête (H).

4. Agencement selon la revendication 3,
**caractérisé en ce que** la liaison à boulons (13N/16 ; 14N/16) est détachée de l'élément de base le plus élevé lorsque les deux têtes des boulons (H1, H2) sont serrées l'un contre l'autre, les taquets d'encliquetage (13N, 14N) se détachant alors de l'écrou d'encliquetage (16) et le boulon de fixation (6') pouvant être retiré de la percée (11, 12).

5. Agencement selon la revendication 1,
**caractérisé en ce que**
le boulon de fixation (6) présente des points de rupture (S) pour en raccourcir manuellement la longueur afin de l'ajuster à la hauteur de l'agencement de porte-câble (1).

6. Agencement selon la revendication 1,
**caractérisé en ce que** les porte-câble (3K1, 3K2, 5K1, 5K1') disposant d'une liaison fixe à l'élément de base (3B, 5B, 5B') présentent un lit (B) pour recevoir les câbles ou autres éléments similaires ainsi que des passages (R) pour y introduire un serre-câble ou autre élément similaire.

7. Agencement selon la revendication 1,
**caractérisé en ce que** le socle (2), l'unité porte-câble (3) et l'entretoise sont formés en une seule pièce ou en deux moitiés identiques (2-1, 2-2 ; 3-1, 3-2) pouvant être assemblées, ou que l'unité porte-câble (5) peut être assemblée à partir de deux pièces différentes (5-1, 5-2).

8. Agencement selon la revendication 7,
**caractérisé en ce que** les moitiés identiques ou les pièces non identiques peuvent être assemblées au moyen de trous/tenons d'emboîtement.

9. Agencement selon la revendication 1,
**caractérisé en ce que**
l'élément de base (3B, 5B) d'une unité porte-câble (3, 5) et l'entretoise (4) sont identiques.

10. Agencement selon la revendication 1,
**caractérisé en ce que**
l'agencement de porte-câble est composé de plastique, idéalement de polyétherimide.
